# EUROPEAN PATENT APPLICATION

(11) **EP 4 521 786 A1**
(43) Date of publication of application: **12.03.2025**
(21) Application number: 23799253.2
(22) Date of filing: 04.05.2023
(51) Int. Cl.: H04W 4/70, H04W 88/04, H04W 40/02

(54) **METHOD EXECUTED BY USER EQUIPMENT, AND USER EQUIPMENT**

(30) Priority: 06.05.2022 CN 202210489896
(71) Applicant: Sharp Kabushiki Kaisha, Sakai City, Osaka 590-8522 (JP)
(72) Inventor: LIU, Renmao, Shanghai 201206 (CN); ZHANG, Chongming, Shanghai 201206 (CN)
(74) Representative: Müller Hoffmann & Partner
(86) International application number: PCT/CN2023/092018
(87) International publication number: WO 2023/213267

(57) **Abstract**

The present invention provides a method executed by a user equipment, and a user equipment. The method comprises the following steps: upper layers of a remote UE requesting transmission of a PC5-S message or requesting a sidelink SRB for transmitting the PC5-S message, the upper layers being an RRC layer or above, and the PC5-S message being a message based on a PC5 signaling protocol stack; on the basis of the request, the RRC layer of the remote UE establishing a corresponding PDCP entity, RLC entity, and sidelink logical channel for the transmission of the PC5-S message; and the remote UE determining whether the SRB is used for a remote UE of a sidelink layer 2 relay architecture, or is used for a PC5-S message between end-to-end remote UEs in a relay scenario, and if it is determined so, then the remote UE applying an SRAP configuration, wherein the application of the SRAP configuration at least comprises establishing an SRAP entity.

## Description

### TECHNICAL FIELD

The present invention relates to the technical field of wireless communications. More specifically, the present invention relates to a method executed by a user equipment, and a corresponding user equipment.

### BACKGROUND ART

A user equipment (UE) may communicate with another user equipment via a relay UE. The UEs which communicate via the relay UE are called remote UEs. According to their roles in communication, one of the UEs may be referred to as an initiating UE, the other as a target UE, or alternatively, one of the UEs may be referred to as a source UE, and the other as a destination UE.

The initiating UE and the target UE can communicate with each other via a PC5 interface. Hence, before the connection is established, PC5-S messages need to be exchanged. How to realize correct routing of these PC5-S messages by the relay UE is an issue that needs to be addressed.

### SUMMARY OF THE INVENTION

In order to address the aforementioned issue, the present invention provides a method executed by a user equipment, and a user equipment.

According to an aspect of the present invention, there is provided a method executed by a user equipment, which is a method executed during the process of one user equipment UE conducting sidelink communication with another UE through a relay UE, wherein the two UEs communicating via the relay UE are referred to as remote UEs, the method comprising the following steps:
upper layers of a remote UE requesting transmission of a PC5-S message or requesting a sidelink SRB for transmitting the PC5-S message, the upper layers being an RRC layer or above, and the PC5-S message being a message based on a PC5 signaling protocol stack;
on the basis of the request, the RRC layer of the remote UE establishing a corresponding PDCP entity, RLC entity, and sidelink logical channel for the transmission of the PC5-S message; and
the remote UE determining whether the SRB is used for a remote UE of a sidelink layer 2 relay architecture, or is used for a PC5-S message between end-to-end remote UEs in a relay scenario, and
if it is determined that the SRB is used for the remote UE of the sidelink layer 2 relay architecture, or is used for the PC5-S message between the end-to-end remote UEs in the relay scenario, then the remote UE applying an SRAP configuration, wherein the application of the SRAP configuration at least comprises establishing an SRAP entity.
In the above-described method executed by a user equipment, preferably,
the RRC layer establishes different SRBs according to the types of PC5-S messages,
SRB0 is used for transmitting a PC5-S message to be transmitted before a PC5-S security mechanism is established;
SRB1 is used for transmitting a PC5-S message for establishing a security mechanism; and
SRB2 is used for transmitting a PC5-S message to be transmitted after a PC5-S security mechanism is established.

In the above-described method executed by a user equipment, preferably, the SRAP configuration is specified in advance.

In the above-described method executed by a user equipment, preferably, the SRAP configuration includes at least one piece of the following information:
a value of an end-to-end bearer identity;
an RLC channel at a PC5 interface; and
a mapping list of bearer identities and RLC channels.

In the above-described method executed by a user equipment, preferably, mapping relationships in the list are:
mapping of SRB0 to a PC5 RLC channel having logical channel identity X;
mapping of SRB 1 to a PC5 RLC channel having logical channel identity Y; and
mapping of SRB2 to a PC5 RLC channel having logical channel identity Z.

In the above-described method executed by a user equipment, preferably,
the values of X, Y and Z are the same value for the three, or are different values for the three, or are such that the values of two of the three are the same.

The foregoing method executed by a user equipment, preferably, further comprises the following step:
the remote UE further determining which of SRB0, SRB 1 and SRB2 the SRB is.

In the above-described method executed by a user equipment, preferably,
when the upper layers of the remote UE stop transmitting the PC5-S message,
the remote UE releases the corresponding PDCP entity, RLC entity and logical channel, and
if the SRAP has been established, the remote UE further releases the corresponding SRAP entity.

According to another aspect of the present invention, provided is a user equipment, comprising:
a processor; and
a memory storing instructions,
the instructions, when run by the processor, causing the user equipment to perform the method described above.

The method executed by a user equipment and the corresponding user equipment according to the present invention, by means of exchange of PC5-S messages, enable correct routing of the PC5-S messages by a relay UE.

### BRIEF DESCRIPTION OF THE DRAWINGS

FIG. 1 is a schematic diagram showing UE-to-UE relaying;
FIG. 2 is a schematic diagram showing establishment of a PC5 connection;
FIG. 3 is a schematic diagram showing control plane protocol stacks of a UE-to-UEL2 architecture;
FIG. 4 shows a method executed by a user equipment (UE) according to an embodiment of the present invention; and
FIG. 5 is a simplified structural block diagram of a user equipment (UE) according to the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP standards and specifications.
UE: User Equipment
NR: New Radio
MAC: Medium Access Control
MAC CE: MAC control element
RLC: Radio Link Control
SDAP: Service Data Adaptation Protocol
PDCP: Packet Data Convergence Protocol
SRAP: Sidelink Relay Adaptation Protocol
RRC: Radio Resource Control
RRC CONNECTED: RRC connected state
RRC INACTIVE: RRC inactive state
RRC_IDLE: RRC idle state
RAN: Radio Access Network
Sidelink: Sidelink
SCI: Sidelink Control Information
AS: Access Stratum
IE: Information Element
CE: Control Element
MIB: Master Information Block
SIB: System Information Block
NG-RAN: NG Radio Access Network
DCI: Downlink Control Information
ADAPT: Adaptation Layer
PHY: Physical Layer
RB: Radio Bearer
DRB: Data Radio Bearer
SRB: Signalling Radio Bearer
PDU: Protocol Data Unit
SDU: Service Data Unit
V2X: Vehicle-to-Everything
CCCH: Common Control Channel
DCCH: Dedicated Control Channel

In the present invention, a user equipment (UE) may be an NR device that supports an NR sidelink relay function, may also refer to an NR device that supports an NR sidelink relay architecture, and may further refer to an NR device or an LTE device of another type.

In the present invention, sidelink and PC5 may be used interchangeably, and an RLC channel, an RLC entity, and an RLC bearer may be used interchangeably.

Hereinafter, a description will be given of related art of the present invention.

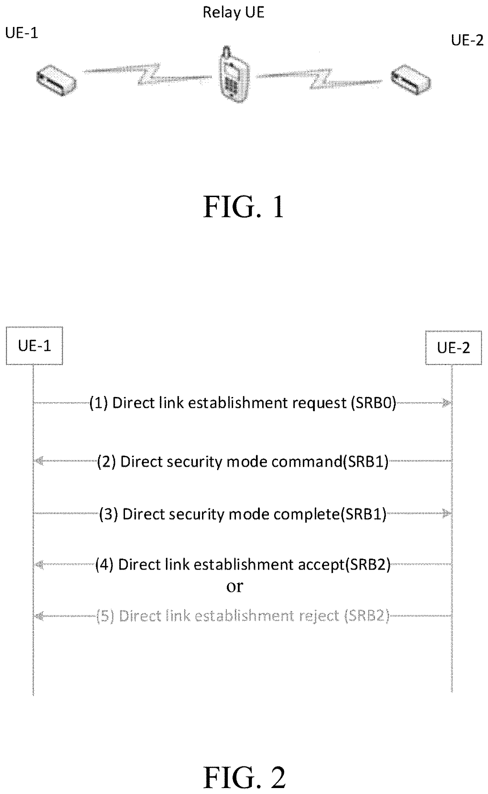

UE-to-UE relaying is as shown in FIG. 1, with a remote UE-1 being on the left side, a relay UE being in the middle, and a remote UE-2 being on the right side. The UE-1 and the relay UE are connected to each other via a PC5 interface, and the relay UE and the UE-2 are connected to each other via a PC5 interface. Because the UE-1 and the UE-2 are located distant from each other, or because a communication environment is poor, the relay UE is needed to relay and forward signaling and data therebetween. According to their roles in communication, one of the UEs may be referred to as an initiating UE, the other as a target UE, or alternatively, one of the UEs may be referred to as a source UE, and the other as a destination UE.

### Establishment of PC5 connection/link

As shown in FIG. 2, in order to establish a PC5 connection, the UE-1 sends to the UE-2, via SRB0, a message (1) Direct link establishment request.

The UE-2 initiates a security mode after receiving the message (1), and sends to the UE-1, via SRB1, a message (2) Direct security mode command.

The UE-1 replies to the UE-2, via SRB1, with a message (3) Direct security mode complete.

Through the message (2) and the message (3), a security mechanism is established between the UE-1 and the UE-2. If the UE-2 accepts the connection establishment request from the UE-1, then the UE-2 may reply to the UE-1, via SRB2, with a message (4) Direct link establishment accept. If the UE-2 does not accept the establishment request from the UE-1, then the UE-2 may reply, via SRB2, with a message (5) Direct link establishment reject.

When the UE-1 receives the message (4) replied by the UE-2, the PC5 connection between the UE-1 and the UE-2 is successfully established. Correspondingly, the UEs (the UE-1 and the UE-2) will instruct a lower layer of the UEs to create PC5 RRC connection establishment, then the UEs will establish a corresponding PDCP entity, RLC entity, and SRB3 for PC5 RRC message transmission, and then the establishment of the PC5 RRC connection is deemed to be complete.

Herein, the messages (1) to (5) are messages based on a PC5 signaling (signalling) protocol stack, and may be referred to as PC5-S messages.

### Establishment of PC5 SRBs

The UEs establish SRBs for the transmission of the PC5-S messages. Different PC5-S messages are transmitted on different types of SRBs.

When a UE needs to transmit a PC5-S message, if a corresponding SRB is not established, then when upper layers of the UE request the transmission of the PC5-S message or request a sidelink SRB for transmitting the PC5-S message, the RRC layer of the UE will establish a corresponding PDCP entity, RLC entity, and sidelink logical channel for the transmission of the PC5-S message. The RRC layer establishes different SRBs according to the types of PC5-S messages. For example,

SRB0 is used to transmit a PC5-S message that needs to be transmitted before a PC5-S security mechanism is established, such as the message (1); SRB1 is used to transmit a PC5-S message used to establish the security mechanism, such as the message (2) and the message (3); and SRB2 is used to transmit a PC5-S message that needs to be transmitted after the PC5-S security mechanism is established, such as the message (4) and the message (5).

### L2 U2U (UE to UE) remote UEs and relay UE

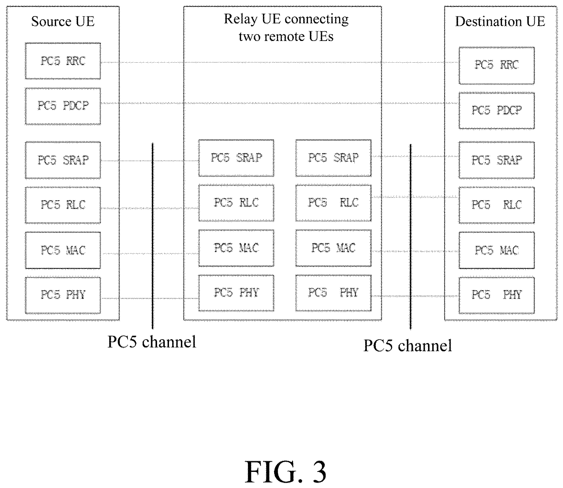

Control plane protocol stacks of remote UEs and a relay UE based on a sidelink layer 2 (L2) relay architecture are as shown in FIG. 3. In the figure, the source UE on the left and the destination UE on the right are both remote UEs, and the relay UE is in the middle.

After the source UE of the remote UEs selects one relay UE to provide a relay service for itself, the source UE will establish a PC5 connection (PC5 link) to the relay UE, so as to communicate with the destination UE via the relay UE. Similarly, the destination UE also needs to establish a PC5 connection to the relay UE.

Then, via the relay UE, a PC5 connection is established between the source UE and the destination UE.

### PC5 interface

A PC5 interface is a wireless communication interface between a remote UE and a relay UE. The remote UE and the relay UE communicate with each other via sidelink, and a communication interface of the sidelink is a PC5 interface. Therefore, the description of the sidelink and the description of PC5 are interchangeable herein.

A PC5 RLC entity refers to an RLC entity for PC5 interface communication. When the UE is connected to the base station via the relay UE, the PC5 RLC entity bears information from a Uu PDCP entity, and therefore such a PC5 RLC entity may also be referred to as a PC5 RLC bearer.

A PC5 SRAP entity refers to an SRAP entity used for PC5 interface communication. When a remote UE connects with a peer UE through a relay UE, a PC5 SRAP at the remote UE side determines, according to the configured mapping relationship of the bearer to the PC5 RLC, to which PC5 RLC channel or channels the data that the initiating UE sends to the destination UE is to be delivered.

Correspondingly, at the destination UE side, the PC5 SRAP determines, according to the configured mapping relationship of the PC5 RLC channel to the bearer, to which bearer or bearers the received data that the initiating UE sends to the destination UE is to be delivered.

A PC5 SRAP entity corresponding to the remote UE side is also present in the relay

### UE.

Hereinafter, several embodiments of the present invention for addressing the above problems are described in detail.

### Example 1

This example provides a method executed by a user equipment UE, which is a method executed during the process of one UE conducting sidelink communication with another UE through a relay UE, wherein the two UEs communicating via the relay UE are referred to as remote UEs.

Example 1 provides a method implemented at a remote UE side.

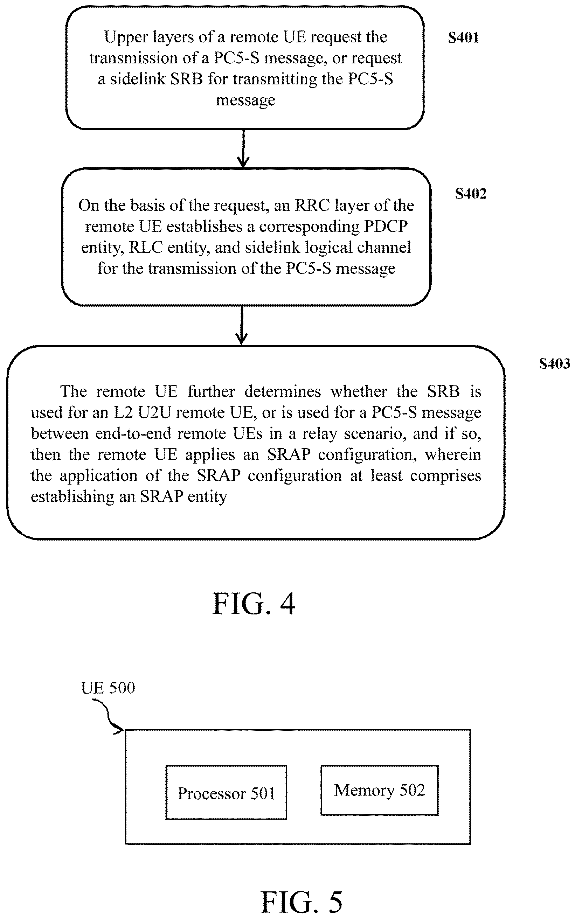

As shown in FIG. 4, the method comprises the following steps:
Step S401: Upper layers of the remote UE request the transmission of a PC5-S message or request a sidelink SRB for transmitting the PC5-S message. Herein, the upper layers generally refer to an RRC layer or above. Herein, the PC5-S message is a message based on a PC5 signaling (signalling) protocol stack.

The RRC layer establishes different SRBs according to the types of the PC5-S messages. For example,
SRB0 is used for transmitting a PC5-S message to be transmitted before a PC5-S security mechanism is established;
SRB1 is used for transmitting a PC5-S message for establishing a security mechanism; and
SRB2 is used for transmitting a PC5-S message to be transmitted after a PC5-S security mechanism is established.
Step S402: On the basis of the request, the RRC layer of the remote UE will establish a corresponding PDCP entity, RLC entity, and sidelink logical channel for the transmission of the PC5-S message.
Step S403: The remote UE further determines whether the SRB is used for an L2 U2U remote UE, or is used for a PC5-S message between end-to-end remote UEs in a relay scenario, and
if so, then the remote UE applies an SRAP configuration, wherein the application of the SRAP configuration at least comprises establishing an SRAP entity, wherein the SRAP configuration may be specified in advance, and may further include one or more pieces of the following information:
   - a value of an end-to-end bearer identity, preferably including a value of a signaling bearer identity, for example, a signaling bearer having a value of 0, that is, SRB0, or a signaling bearer having a value of 1 or 2, that is, SRB1 or SRB2;
   - an RLC channel at a PC5 interface, for example, a channel identity, wherein preferably, the RLC channel may be an egress RLC channel at the PC5 interface, the egress RLC channel being a PC5 RLC channel through which the remote UE sends a data packet to the relay UE; or the RLC channel may be an ingress RLC channel at the PC5 interface, the ingress RLC channel being a PC5 RLC channel used by the remote UE to receive a data packet from the relay UE;
   - a mapping list of bearer identities and RLC channels, wherein mapping relationships in the list may be:
      mapping of SRB0 to a PC5 RLC channel having logical channel identity X;
      mapping of SRB1 to a PC5 RLC channel having logical channel identity Y; and
      mapping of SRB2 to a PC5 RLC channel having logical channel identity Z.

Specifically, the values of X, Y and Z may be the same value for the three, or may be different values for the three, or may be such that the values of two of the three are the same and are different from the value for the last one of the three. For example, the values of Y and Z is the same, and the value of X is different from the values of Y and Z.

Preferably, the remote UE may further determine which SRB the SRB is. For example, when the SRB is SRB0, the above operation is executed, or when the SRB is SRB1, the above operation is executed, or when the SRB is SRB2, the above operation is executed. The specific implementation manner may be as follows:

On the basis of the request, the RRC layer of the remote UE will establish a corresponding PDCP entity, RLC entity, and sidelink logical channel for the transmission of the PC5-S message. In addition, when the SRB is used for an L2 U2U remote UE, or is used for a PC5-S message between end-to-end remote UEs in a relay scenario, and the SRB is SRB1, an SRAP configuration is applied.

Example 1 may be used for remote UEs at both ends of L2 U2U, including the initiating UE and the destination UE.

At the initiating UE side, after the UE applies the SRAP configuration, a data packet from above an SRAP layer will be sent to the SRAP entity. According to destination information associated with the data packet, the UE may add an SRAP header to the data packet to form an SRAP PDU (packet data unit). The destination information and the end-to-end bearer information are carried in the SRAP header. Then, according to the mapping relationship in the SRAP configuration, the SRAP PDU is delivered to the corresponding PC5 RLC channel under the SRAP layer for transmission.

At the destination UE side, after the UE applies the SRAP configuration, the received SRAP PDU will be subjected to removal of the SRAP header, and will be sent to the corresponding PDCP entity/end-to-end bearer according to the bearer information in the header.

### Example 2

Example 2 provides a method implemented at a relay UE side.

When a PC5 RRC connection between a relay UE and a remote UE is established, an SRAP configuration is applied at the relay UE side. The application of the SRAP configuration at least comprises establishing an SRAP entity, wherein the SRAP configuration may be specified in advance, and may further include one or more pieces of the following information:
- a value of an end-to-end bearer identity, preferably including a value of a signaling bearer identity, for example, a signaling bearer having a value of 0, that is, SRB0, or a signaling bearer having a value of 1 or 2, that is, SRB 1 or SRB2;
- an ingress RLC channel at a PC5 interface, for example, a channel identity, wherein the ingress RLC channel here may be an RLC channel used by the relay UE to receive a data packet from the remote UE;
- an egress RLC channel at the PC5 interface, for example, a channel identity, wherein the egress RLC channel here may be an RLC channel through which the relay UE sends a data packet to the remote UE;
- a mapping relationship between the ingress RLC channel and the egress RLC channel, wherein for example, a data packet having a bearer identity of 0 and coming from the ingress RLC channel with an identity of M will be delivered to the egress RLC channel with a channel identity value of N.

### Example 3

As a supplement to Example 1, when the upper layers of the UE stop transmitting the PC5-S message, the UE will release the corresponding PDCP entity, RLC entity and logical channel, and if the SRAP has been established, the corresponding SRAP entity will further need to be released.

FIG. 5 is a simplified structural block diagram of a user equipment (UE) according to the present invention. As shown in FIG. 5, the user equipment UE 500 includes a processor 501 and a memory 502. The processor 501 may include, for example, a microprocessor, a microcontroller, an embedded processor, and the like. The memory 502 may include, for example, a volatile memory (such as a random access memory (RAM)), a hard disk drive (HDD), a non-volatile memory (such as a flash memory), or other memories. etc. The memory 502 has program instructions stored thereon. The instructions, when run by the processor 501, can perform the above method executed by a user equipment described in detail in the present invention.

The program running on the device according to the present invention may be a program that enables a computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method executed by a user equipment, which is a method executed during the process of one user equipment UE conducting sidelink communication with another UE through a relay UE, wherein the two UEs communicating via the relay UE are referred to as remote UEs, the method comprising the following steps:
upper layers of a remote UE requesting transmission of a PC5-S message or requesting a sidelink SRB for transmitting the PC5-S message, the upper layers being an RRC layer or above, and the PC5-S message being a message based on a PC5 signaling protocol stack;
on the basis of the request, the RRC layer of the remote UE establishing a corresponding PDCP entity, RLC entity, and sidelink logical channel for the transmission of the PC5-S message; and
the remote UE determining whether the SRB is used for a remote UE of a sidelink layer 2 relay architecture, or is used for a PC5-S message between end-to-end remote UEs in a relay scenario, and
if it is determined that the SRB is used for the remote UE of the sidelink layer 2 relay architecture, or is used for the PC5-S message between the end-to-end remote UEs in the relay scenario, then the remote UE applying an SRAP configuration, wherein the application of the SRAP configuration at least comprises establishing an SRAP entity.

2. The method executed by a user equipment according to claim 1, wherein
the RRC layer establishes different SRBs according to the types of PC5-S messages,
SRB0 is used for transmitting a PC5-S message to be transmitted before a PC5-S security mechanism is established;
SRB 1 is used for transmitting a PC5-S message for establishing a security mechanism; and
SRB2 is used for transmitting a PC5-S message to be transmitted after a PC5-S security mechanism is established.

3. The method executed by a user equipment according to claim 2, wherein the SRAP configuration is specified in advance.

4. The method executed by a user equipment according to claim 2, wherein the SRAP configuration includes at least one piece of the following information:
a value of an end-to-end bearer identity;
an RLC channel at a PC5 interface; and
a mapping list of bearer identities and RLC channels.

5. The method executed by a user equipment according to claim 4, wherein mapping relationships in the list are:
mapping of SRB0 to a PC5 RLC channel having logical channel identity X;
mapping of SRB 1 to a PC5 RLC channel having logical channel identity Y; and
mapping of SRB2 to a PC5 RLC channel having logical channel identity Z.

6. The method executed by a user equipment according to claim 5, wherein
the values of X, Y and Z are the same value for the three, or are different values for the three, or are such that the values of two of the three are the same.

7. The method executed by a user equipment according to claim 2, further comprising the following step:
the remote UE further determining which of SRB0, SRB 1 and SRB2 the SRB is.

8. The method executed by a user equipment according to any one of claims 1 to 7, wherein
when the upper layers of the remote UE stop transmitting the PC5-S message,
the remote UE releases the corresponding PDCP entity, RLC entity and logical channel, and
if the SRAP has been established, the remote UE further releases the corresponding SRAP entity.

9. A user equipment, comprising:
a processor; and
a memory storing instructions,
wherein the instructions, when run by the processor, cause the user equipment to perform the method according to any one of claims 1-8.
